Europäisches Patentamt

European Patent Office

Office européen des brevets

(11) Publication number: **0 051 974**
**B1**

(12) **EUROPEAN PATENT SPECIFICATION**

(45) Date of publication of patent specification: **06.03.85**

(21) Application number: **81305235.4**

(22) Date of filing: **04.11.81**

(51) Int. Cl.⁴: **H 02 P 5/16**

(54) **Permanent magnet D.C. motor control circuit.**

(30) Priority: **05.11.80 GB 8035485**

(43) Date of publication of application:
**19.05.82 Bulletin 82/20**

(45) Publication of the grant of the patent:
**06.03.85 Bulletin 85/10**

(84) Designated Contracting States:
**DE FR GB IT SE**

(56) References cited:
**CH-A- 523 627**
**DE-A-1 922 283**
**FR-A-1 556 916**
**FR-A-2 386 931**

(73) Proprietor: **LUCAS INDUSTRIES public limited company**
**Great King Street**
**Birmingham, B19 2XF (GB)**

(72) Inventor: **Wiley, David**
**21 Howdles Lane Brownhills**
**Walsall West Midlands (GB)**
Inventor: **Greene, Colin Keith**
**28 Millhaven Avenue**
**Stirchley Birmingham, B30 2QH (GB)**

(74) Representative: **Evershed, Michael et al**
**Marks & Clerk Alpha Tower Suffolk Street**
**Queensway**
**Birmingham B1 ITT (GB)**

Courier Press, Leamington Spa, England.

## Description

This invention relates to a permanent magnet d.c. motor control circuit.

Control of a permanent magnet d.c. motor can be effected by varying the average voltage impressed on the motor, the speed being determined by the load/speed characteristic of the motor. Such control is, for many applications, preferable to control by conventional closed loop speed controls (see e.g. French Patent No. 1,556,916), since such controls can be unstable in some load conditions and curing of the instability can render the control loop complex and expensive.

Where an average voltage control is to be used in circumstances in which the supply voltage is likely to fluctuate some arrangement is required to enable the average voltage to be stabilized. Application of the principles of conventional closed loop speed controls as referred to above is not possible since such controls derive a feedstick signal by direct sensing of the motor voltage during the periods between the output pulses of a switch mode output amplifier so as to enable speed to be measured. Direct motor sensing where average voltage control is required is impossible since the average voltage across the motor is different from the average voltage impressed on the motor, because of the back e.m.f. generated by the motor.

It is an object of the invention to provide closed loop control circuit in which direct motor voltage sensing is not necessary.

In accordance with the invention there is provided a permanent magnet d.c. motor control circuit for controlling the voltage applied to the motor, comprising an output amplifier having the motor as its load, a driver amplifier for driving the output amplifier, a reference signal generator which is independent of supply voltage variations, feedback means and mark-to-space ratio control means and connected to said reference signal generator and controlling the driver amplifier so as to switch the output amplifier on and off, characterised by a circuit connecting the output of the driver amplifier to the input of the output amplifier and having thereon a feedback signal take-off point, the average voltage at which is representative of the average voltage impressed on the motor by the output amplifier, said feedback signal take-off point being buffered from the motor by the output amplifier and being connected to said feedback means, whereby the mark-to-space ratio is controlled to maintain the average voltage at said feedback take-off point at a level determined by said reference signal generator independently of motor speed and supply voltage variations, so that the average voltage applied to the motor is controlled independently of the supply voltage variations.

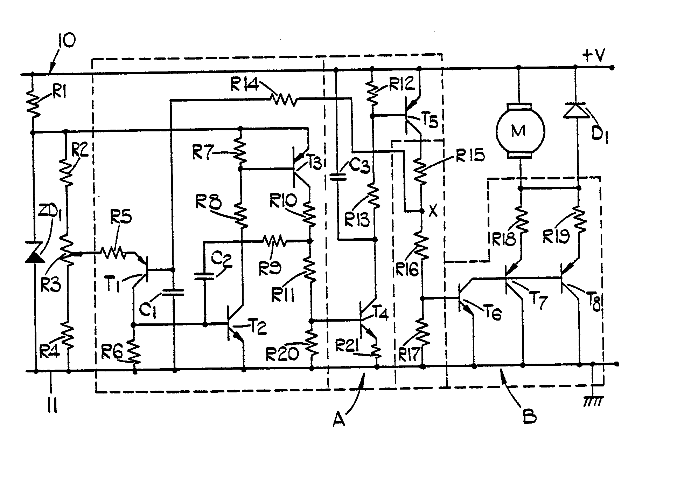

An example of the invention is shown in the accompanying drawing which is a circuit diagram of the control circuit.

The circuit includes a positive supply rail 10 and a ground rail 11. A resistor $R_1$ is connected between rail 10 and the cathode of a zener diode $ZD_1$, the anode of which is connected to rail 11. The cathode of zener diode $ZD_1$ is connected by a resistor $R_2$, a potentiometer $R_3$ and a resistor $R_4$ in series to the rail 11. The slider of potentiometer $R_3$ provides a reference signal which is adjustable but independent of supply voltage variations.

The slider of potentiometer $R_3$ is connected by a resistor $R_5$ to the emitter of a pnp transistor $T_1$, the collector of which is connected by a resistor $R_6$ to the rail 11. The collector of the transistor $T_1$ is connected to the base of an npn transistor $T_2$ forming the input stage of a switching amplifier. The emitter of transistor $T_2$ is connected to the rail 11 and its collector is connected by two resistors $R_7$, $R_8$ in series to the cathode of the zener diode $ZD_1$. A pnp transistor $T_3$ has its emitter connected to the cathode of the zener diode $ZD_1$ and its base connected to the junction of the resistors $R_7$ and $R_8$. The collector of the transistor $T_3$ is connected by three resistors $R_{10}$, $R_{11}$ and $R_{20}$ in series to the rail 11. The junction of resistors $R_{10}$ and $R_{11}$ is connected by a resistor $R_9$ and a capacitor $C_2$ in series to the base of transistor $T_2$ so as to provide transient positive feedback and thereby provide rapid switching of transistors $T_2$ and $T_3$ between their on and off states.

The junction of the resistors $R_{11}$ and $R_{20}$ is connected to the base of an npn transistor $T_4$ providing the input stage of a driver amplifier A. The emitter of the transistor $T_4$ is connected through a resistor R21 to the rail 11 and its collector is connected by two resistors $R_{12}$, $R_{13}$ in series to the rail 10. A capacitor $C_3$ is also connected between the collector of the transistor $T_4$ and the rail 10. A pnp transistor $T_5$ has its emitter connected to the rail 11 and its base connected to the junction of the resistors $R_{12}$, $R_{13}$. The collector of the transistor $T_5$ is connected by three resistors $R_{15}$, $R_{16}$, and $R_{17}$ in series to the rail 11. The junction of resistors $R_{15}$ and $R_{16}$ forms a feedback signal take-off point X which is connected by a resistor $R_{14}$ to the base of the transistor $T_1$, which base is also connected by a capacitor $C_1$ to the rail 11.

An npn transistor $T_6$, forming the input stage of an output amplifier B has its emitter connected to the rail 11 and its base connected to the junction of the resistors $R_{16}$ and $R_{17}$. The collector of the transistor $T_6$ is connected to the bases of two pnp power transistors $T_7$ and $T_8$ connected as parallel emitter followers with their collectors connected by the rail 11 and their emitters connected by respective current sharing resistors $R_{18}$, $R_{19}$ to one terminal of the permanent magnet d.c. motor M, the other terminal of which is connected to the rail 10. A "freewheel" diode $D_1$ is connected across the motor M.

The transistors $T_2$ and $T_3$ operate as a constant frequency switching circuit, capacitor $C_2$ and resistor $R_9$ providing transient regenerative feedback. The mark-to-space ratio of these oscillations is controlled by the voltage across resistor $R_6$ which in turn is dependent on the voltage on capacitor $C_1$ relative to the voltage at the slider of potentiometer $R_3$. The voltage on $C_1$ depends on the average voltage at the point 'X'. When transistors $T_4$—$T_8$ are all on, the point 'X' is at a high voltage dependent on the voltage on rail 10. When these transistors are off the point 'X' is at the voltage on rail 11. The time constant of resistor $R_{14}$ and capacitor $C_1$ is long compared with the period of oscillation of transistors $T_2$ and $T_3$. As the mark-to-space ratio rises the average voltage at point 'X' rises, thereby reducing the conduction in the base emitter of transistor $T_1$, reducing the voltage on resistor $R_6$ and thereby reducing the mark-to-space ratio, so that closed loop mark-to-space control is achieved. Since the voltage at point 'X' is also dependent on the voltage on rail 10, however, compensation for fluctuations in this voltage is automatically achieved.

The component values are chosen so that at the minimum setting of the potentiometer $R_3$, $T_1$ and $T_2$ are permanently off and at the maximum $T_1$ and $T_2$ are permanently on. In the former state the only current drawn by the circuit is that passing through the zener diode and the resistors $R_2$, $R_3$ and $R_4$. This "off" current can be made very small.

The circuit provides a closed loop control of the motor, which is insensitive to supply voltage variations but which is not affected by the back e.m.f. generated by the motor since the point X is buffered by the output amplifier. The voltage at point X varies with supply voltage in the same manner as does the impressed voltage on the motor (i.e. ignoring back e.m.f.).

The capacitor $C_3$ and resistor R21 limit the rate of change of the output of the output amplifier, thereby reducing the risk of radio frequency interference.

## Claims

1. A permanent magnet d.c. motor control circuit for controlling the voltage applied to the motor, comprising an output amplifier (B) having the motor (M) as its load, a driver amplifier (A) for driving the output amplifier (B), a reference signal generator ($ZD_1$, $R_1$—$R_4$) which is independent of supply voltage variations, feedback means ($R_{14}$, $C_1$) and mark-to-space ratio control means ($T_1$, $T_2$, $T_3$ and associated passive components) connected to said reference signal generator and controlling the driver amplifier so as to switch the output amplifier on and off, characterised by a circuit ($R_{15}$, $R_{16}$, $R_{17}$) connecting the output of the driver amplifier to the input of the output amplifier and having therein a feedback signal take-off point (X), the average voltage at which is representative of the average voltage impressed on the motor by the output amplifier, said feedback signal take-off point being buffered from the motor by the output amplifier and being connected to said feedback means, whereby the mark-to-space ratio is controlled to maintain the average voltage at said feedback take-off point at a level determined by said reference signal generator independently of motor speed and supply voltage variations, so that the average voltage applied to the motor is controlled independently of the supply voltage variations.

2. A control circuit as claimed in Claim 1 in which said circuit comprises a resistor chain ($R_{15}$, $R_{16}$, $R_{17}$) connecting the output of the driver amplifier to the input of the output amplifier.

3. A control circuit as claimed in Claim 1 or Claim 2 in which said mark-to-space ratio control means comprises a switching amplifier ($T_2$, $T_3$), a transient positive feedback path ($R_9$, $C_2$) connecting the output of the switching amplifier to its input, and means ($T_1$) for biasing the input of the switching amplifier in accordance with the reference signal and the feedback signal.

4. A control circuit as claimed in Claim 3, in which said biasing means comprises a transistor ($T_1$) having its collector connected to the input of the switching amplifier and also connected by a bias resistor ($R_6$) to a supply rail, a second resistor ($R_5$) connecting the emitter of the transistor ($T_1$) to the reference signal generator, a third resistor ($R_{14}$) connecting the base of said transistor ($T_1$) to the feed-back signal take-off point (X), and a capacitor ($C_1$) connecting the base of said transistor ($T_1$) to said supply rail.

## Patentansprüche

1. Regelschaltung für einen Gleichstrommotor mit Permanentmagnet zur Regelung der an den Motor angelegten Spannung umfassend einen Ausgangsverstärker (B) der den Motor (M) als Last aufweist, einen Treiberverstärker (A) zum Treiben des Ausgangsverstärkers (B), einen Referenzsignalgenerator ($ZD_1$, $R_1$—$R_4$) der unabhängig von den Spannungsversorgungsänderungen ist, eine Rückkopplungseinrichtung ($R_{14}$, $C_1$) und eine Zeichen-Pause-Verhältnis-Regeleinrichtung ($T_1$, $T_2$, $T_3$ und verbundene passive Komponenten) die mit dem Referenzsignalgenerator verbunden ist und die den Treiberverstärker regelt, um so den Ausgangsverstärker ein- und auszuschalten, gekennzeichnet durch eine Schaltung ($R_{15}$, $R_{16}$, $R_{17}$), die den Ausgang des Treiberverstärkers mit dem Eingang des Ausgangsverstärkers verbindet und die einen Signalrückkopplungsabgriffspunkt (X) aufweist, an dem die Durchschnittsspannung repräsentativ der Durchschnittsspannung ist, die dem Motor durch den Ausgangsverstärker aufgezwungen bzw. aufgeprägt wird, wobei der Signalrückkopplungsabgriffspunkt gegenüber dem Motor durch den Ausgangsverstärker gepuffert ist und mit der Rückkopplungseinrichtung verbunden ist, wobei das Zeichen-Pause-Verhältnis zur Aufrechterhaltung der Durchschnittsspannung an dem Rückkopplungsabgriffspunkt auf einen Pegel geregelt wird, der durch den Referenzsignalgenerator unabhängig von der Motordrehzahl und den Spannungsversorgungsänderungen bestimmt ist, so daß die Durchschnittsspannung, die an dem Motor angelegt ist, unabhängig von den Spannungsversorgungsänderungen geregelt wird.

2. Regelschaltung nach Anspruch 1, dadurch gekennzeichnet, daß die Schaltung eine Widerstandskette ($R_{15}$, $R_{16}$, $R_{17}$) aufweist, die den Ausgang des Treiberverstärkers mit dem Eingang des Ausgangsverstärkers verbindet.

3. Regelschaltung nach Anspruch 1 oder 2, dadurch gekennzeichnet, daß die Zeichen-Pause-Verhältnis-Steuereinrichtung einen Schaltverstärker ($T_2$, $T_3$) einen transienten bzw. ausgleichenden positiven Rückkopplungspfad ($R_9$, $C_2$), der den Ausgang des Schaltverstärkers mit seinem Eingang verbindet, und eine Einrichtung ($T_1$) zum Vorspannen des Eingangs des Schaltverstärkers in Übereinstimmung mit dem Referenzsignal und dem Rückkopplungssignal aufweist.

4. Regelschaltung nach Anspruch 3, dadurch gekennzeichnet, daß die Vorspanneinrichtung einen Transistor ($T_1$), dessen Kollektor mit dem Eingang des Schaltverstärkers verbunden und außerdem durch einen Vorspannwiderstand ($R_6$) mit einer Versorgungsschiene verbunden ist, einen zweiten Widerstand ($R_5$), der den Emitter des Transistors ($T_1$) mit dem Referenzsignalgenerator verbindet, einen dritten Widerstand ($R_{14}$), der die Basis des Transistors ($T_1$) mit dem Rückkopplungssignalabgriffspunkt (X) verbindet, und einen Kondensator ($C_1$) aufweist, der die Basis des Transistors ($T_1$) mit der Versorgungsschiene verbindet.

## Revendications

1. Circuit de commande de moteur à courant continu à aimant permanent destiné à commander la tension appliquée du moteur, comportant un amplificateur de sortie (B) comprenant le moteur (M) comme charge, un amplificateur d'attaque (A) pour attaquer l'amplificateur de sortie (B), un générateur de signal de référence (ZD1, R1—R4) qui est indépendant des variations de tension d'alimentation, un dispositif de réaction (R14, C1) et un dispositif de commande de rapport d'impulsions (T1, T2, T3) et les composants passifs associés, connecté audit générateur de signal de référence et commandant l'amplificateur d'attaque de manière à débloquer et à bloquer l'amplificateur de sortie, caractérisé par un circuit (R15, R16, R17) connectant la sortie de l'amplificateur d'attaque à l'entrée de l'amplificateur de sortie et comprenant un point (X) de prélèvement de signal de réaction, la tension moyenne à ce point représentant la tension moyenne appliquée au moteur par l'amplificateur de sortie, le point de prélèvement de signal de réaction étant séparé du moteur par l'amplificateur de sortie et étant connecté audit dispositif de réaction de manière que le rapport d'impulsions soit commandé pour maintenir la tension moyenne audit point de prélèvement de réaction à un niveau déterminé par ledit générateur de signal de référence indépendamment de la vitesse du moteur et des variations de tension d'alimentation, de sorte que la tension moyenne appliquée au moteur est contrôlée indépendamment des variations de tension d'alimentation.

2. Circuit de commande selon la revendication 1, dans lequel ledit circuit comporte une charge de résistances (R15, R16, R17) connectant la sortie de l'amplificateur d'attaque à l'entrée de l'amplificateur de sortie.

3. Circuit de commande selon la revendication 1 ou 2, dans lequel ledit dispositif de commande de rapport d'impulsions comporte un amplificateur de commutation (T2, T3), un circuit de réaction positive transitoire (R9, C2) connectant la sortie de l'amplificateur de commutation à son entrée et un dispositif (T1) pour polariser l'entrée de l'amplificateur de commutation en fonction du signal de référence et du signal de réaction.

4. Circuit de commande selon la revendication 3, dans lequel ledit dispositif de polarisation comporte un transistor (T1) dont le collecteur est connecté à l'entrée de l'amplificateur de commutation et est également connecté par une résistance de polarisation (R6) à un conducteur d'alimentation, une second résistance (R5) connectant l'émetteur du transistor (T1) au générateur de signal de référence, une troisième résistance (R14) connectant la base dudit transistor (T1) au point (X) de prélèvement de signal de réaction et un condensateur (C1) connectant la base dudit transistor (T1) audit conducteur d'alimentation.